# EUROPÄISCHE PATENTSCHRIFT

(11) **EP 2 840 235 B1**
(45) Veröffentlichungstag und Bekanntmachung des Hinweises auf die Patenterteilung: **03.10.2018**
(21) Anmeldenummer: 14179410.7
(22) Anmeldetag: 31.07.2014
(51) Int. Cl.: F01D 21/04, F01D 25/16, F16C 19/52

(54) **Sicherungseinrichtung für eine Lageranordnung eines Rotors einer Turbomaschine**
Safety device for a bearing assembly of a rotor of a turbo engine
Dispositif de sécurisation pour un système de palier de rotor d'une turbomachine

(30) Priorität: 21.08.2013 DE 102013216598
(43) Veröffentlichungstag der Anmeldung: 25.02.2015
(73) Patentinhaber: MTU Aero Engines AG, 80995 München (DE)
(72) Erfinder: Böck, Alexander, 82288 Kottgeisering (DE)

(56) Entgegenhaltungen:
- EP-A2- 1 199 441
- FR-A1- 2 877 994
- GB-A- 2 401 651
- US-A- 5 433 584

## Beschreibung

Die Erfindung betrifft eine Sicherungseinrichtung für eine Lageranordnung eines Rotors einer Turbomaschine. Weiterhin betrifft die Erfindung ein Verfahren zum Herstellen einer solchen Sicherungseinrichtung sowie eine Lageranordnung eines Rotors einer Turbomaschine mit einer derartigen Sicherungseinrichtung.

Im Fall eines Schaufelversagens in einem Turbotriebwerk, beispielsweise aufgrund eines Vogelschlags oder dergleichen, treten hohe Unwuchten am Rotor auf, welche im schlimmsten Fall die Lageranordnung des Rotors sowie weitere statische Strukturen einschließlich der Triebwerksaufhängung beschädigen oder sogar zerstören können. Um dies nach Möglichkeit auszuschließen, können mechanische Sicherungseinrichtungen verwendet werden, die beim Überschreiten einer Grenzkraft den Rotor radial freigeben, so dass keine Unwuchtkräfte mehr auftreten. Eine Lageranordnung mit einer Sicherungseinrichtung, die ein Sollbruchglied umfasst, das beim Überschreiten bestimmter radialer Grenzkräfte gewollt bricht und eine Abkopplung des Rotors von der Lageranordnung bewirkt, ist beispielsweise der EP 1 199 441 A2 zu entnehmen.

US 5,433,584 offenbart eine andere Lösung für einer Lageranordnung mit einem Sollbruchglied. Ein Hauptproblem dieser Sicherungseinrichtungen ist jedoch die Auslegung der Sollbruchstellen, da bei diesen die Grenzkraft wegen Bauteiltoleranzen, Streuung von Werkstoffeigenschaften und der Streubreite der Bruchmechanik nur sehr ungenau einstellbar ist. Daher sind solche Sicherungseinrichtungen auch nicht in Umgebungen einsetzbar, wo nur vergleichsweise geringe Unterschiede zwischen unzulässigen Unwuchtkräften und Kräften aus dem normalen Betrieb einer Turbomaschine vorherrschen.

Aufgabe der Erfindung ist es, eine Sicherungseinrichtung für eine Lageranordnung eines Rotors einer Turbomaschine bereitzustellen, welche eine präzisere Einstellung der Grenzkraft ermöglicht. Weitere Aufgaben der Erfindung bestehen in der Bereitstellung eines Verfahrens zum Herstellen einer solchen Sicherungseinrichtung sowie in der Bereitstellung einer Lageranordnung eines Rotors einer Turbomaschine mit einer derartigen Sicherungseinrichtung.

Die Aufgaben werden erfindungsgemäß durch eine Sicherungseinrichtung mit den Merkmalen des Anspruchs 1 für eine Lageranordnung eines Rotors einer Turbomaschine, durch ein Verfahren mit den Merkmalen des Anspruchs 9 zum Herstellen einer Sicherungseinrichtung für eine Lageranordnung eines Rotors einer Turbomaschine sowie durch eine Lageranordnung mit den Merkmalen des Anspruchs 11 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Sicherungseinrichtung als vorteilhafte Ausgestaltungen des Verfahrens und umgekehrt anzusehen sind.

Ein erster Aspekt der Erfindung betrifft eine Sicherungseinrichtung für eine Lageranordnung eines Rotors einer Turbomaschine, bei welcher erfindungsgemäß vorgesehen ist, dass die Sicherungseinrichtung wenigstens zwei Stützstrukturen umfasst, zwischen welchen wenigstens eine Knickstruktur angeordnet ist, die ausgelegt ist, beim Überschreiten einer vorbestimmten, auf wenigstens eine der Stützstrukturen wirkenden Knicklast unter Volumenverringerung der Sicherungseinrichtung zu kollabieren. Mit anderen Worten wird bei der erfindungsgemäßen Sicherungseinrichtung das Auslösen der mechanischen Sicherung nicht über den Bruch bestimmter Elemente, sondern über das bruchlose Kollabieren bzw. Knicken der Knickstruktur gesteuert. Im Vergleich zu einem herkömmlichen Gewaltbruch ist die zum Auslösen erforderliche Grenzkraft dabei wesentlich präziser einstellbar. Um den zum Entkoppeln eines Rotors notwendigen Freiraum nach dem Auslösen zu schaffen, wird die Knickstruktur zwischen zwei Stützstrukturen angeordnet, so dass sich beim Kollabieren der Knickstruktur eine Volumenverringerung der Sicherungseinrichtung ergibt. Die erfindungsgemäße Sicherungseinrichtung erlaubt damit eine einfache und kostengünstige Herstellung einer präzisen mechanischen Sicherung, die im Unterschied zum Stand der Technik auch in Bereichen angewendet werden kann, bei denen dies bisher wegen zu geringer Unterschiede zwischen den Unwuchtkräften und den Kräften aus dem normalen Betrieb nicht möglich war, beispielsweise in Turbinen. Als zusätzlich Vorteil kann daher das Gewicht der Turbinenkomponenten bzw. der Lageranordnung reduziert werden, da diese nicht mehr auf die maximal möglichen Unwuchtkräfte, sondern nur noch auf die definierte Grenzkraft ausgelegt werden müssen. Die Stützstrukturen sind dabei vorzugsweise stabiler als die Knickstruktur ausgelegt, so dass sie beim Überschreiten der Knicklast nicht oder zumindest im Wesentlichen nicht kollabieren oder sich anderweitig verformen. Vorzugsweise umfasst die Sicherungseinrichtung mehrere gestapelte Stützstrukturen, zwischen welchen jeweils eine Knickstruktur angeordnet ist. Die Stütz- und Knickstrukturen können als Mikrostrukturen ausgebildet sein, so dass durch eine Vielzahl von quasi parallel geschalteten Knickstrukturen eine besonders geringere Streuung des Knickvorgangs im Vergleich zu einem Gewaltbruch erzielt wird. Dies ermöglicht eine besonders präzise Einstellung der Grenzkraft.

In einer vorteilhaften Ausgestaltung der Erfindung weist wenigstens eine der Stützstrukturen der Sicherungseinrichtung Hohlräume auf. Dies führt einerseits zu einer Verbesserung der mechanischen Stabilität der Stützstruktur bzw. der Stützstrukturen und andererseits zu einer vorteilhaften Gewichtsersparnis.

Weitere Vorteile ergeben sich, indem die Hohlräume zumindest bereichsweise regelmäßig angeordnet und/oder zumindest teilweise im Querschnitt polygonal, insbesondere als regelmäßige Polygone ausgebildet sind. Durch eine regelmäßige Anordnung der Hohlräume wird eine gleichmäßige mechanische Stabilität über die gesamte Erstreckung der Stützstrukturen erzielt. Indem die Höhlräume im Querschnitt polygonal ausgebildet sind, also beispielsweise 3, 4, 5, 6, 7, 8, 9, 10, 11, 12, 13, 14, 15, 16 oder 17 Ecken aufweisen, können Kraftleitungspfade entlang der Sicherungseinrichtung besonders präzise definiert werden. Beispielsweise können gezielt anisotropische oder isotropische Kraftleitungspfade definiert werden. Vorzugsweise sind die Hohlräume im Querschnitt als regelmäßige Polygone, beispielsweise als gleichseitiges Dreieck oder regelmäßiges Sechseck ausgebildet, wodurch eine besonders hohe mechanische Stabilität sowie eine kompakte und bauraumsparende Ausgestaltung der Stützstrukturen erzielbar sind.

Gemäß der Erfindung ist vorgesehen, dass die Knickstruktur wenigstens ein Knickelement, insbesondere eine Knickplatte, umfasst, welches an seinen gegenüberliegenden Endbereichen jeweils mit einer Stützstruktur verbunden ist und beim Kollabieren der Knickstruktur biegegeknickt wird. Mit anderen Worten umfasst die Knickstruktur mehrere Knickelemente, die beidenends mit jeweils einer Stützstruktur verbunden sind und beim Kollabieren der Knickstruktur im Sinne des 4. Eulerschen Knickfalls biegegeknickt werden. Das oder die Knickelemente sind vorzugsweise als Knickplatten bzw. plattenförmig ausgebildet. Weiterhin kann grundsätzlich vorgesehen sein, dass das als Knickplatte ausgebildete Knickelement bzw. die als Knickplatten ausgebildeten Knickelemente gleichmäßige oder ungleichmäßige Querschnittsgeometrien aufweisen, also beispielsweise lokal verdickt oder verdünnt ausgebildet sind, um ein spezifisches Knickverhalten zu realisieren. Es kann weiterhin vorgesehen sein, dass das Knickelement oder die Knickelemente aus einem einheitlichen Material und/oder aus mehreren unterschiedlichen Materialien bestehen.

Weitere Vorteile ergeben sich, indem eine Erstreckungsachse des wenigstens einen Knickelements zumindest im Wesentlichen senkrecht und/oder in einem nicht-rechtwinkligen Winkel zu jeweiligen Haupterstreckungsebenen der Stützstrukturen angeordnet ist. Mit anderen Worten ist es vorgesehen, dass das wenigstens eine Knickelement beispielsweise in einem Winkel von etwa 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44°, 45°, 46°, 47°, 48°, 49°, 50°, 51°, 52°, 53°, 54°, 55°, 56°, 57°, 58°, 59°, 60°, 61°, 62°, 63°, 64°, 65°, 66°, 67°, 68°, 69°, 70°, 71°, 72°, 73°, 74°, 75°, 76°, 77°, 78°, 79°, 80°, 81°, 82°, 83°, 84°, 85°, 86°, 87°, 88°, 89°, 90°, 91°, 92°, 93°, 94°, 95°, 96°, 97°, 98°, 99°, 100°, 101°, 102°, 103°, 104°, 105°, 106°, 107°, 108°, 109°, 110°, 111°, 112°, 113°, 114°, 115°, 116°, 117°, 118°, 119°, 120°, 121°, 122°, 123°, 124°, 125°, 126°, 127°, 128°, 129°, 130°, 131°, 132°, 133°, 134°, 135°, 136°, 137°, 138°, 139°, 140°, 141°, 142°, 143°, 144°, 145°, 146°, 147°, 148°, 149°, 150°, 151°, 152°, 153°, 154°, 155°, 156°, 157°, 158°, 159°, 160°, 161°, 162°, 163°, 164°, 165°, 166°, 167°, 168°, 169° oder 170° ° zu den zugeordneten Haupterstreckungsebenen der angrenzenden Stützstrukturen angeordnet ist. Durch eine zumindest im Wesentlichen senkrechte Anordnung, das heißt durch eine Anordnung in einem Winkel zwischen etwa 80° und etwa 100°, ist einerseits eine im Normalbetrieb mechanisch stabile Anbindung gewährleistet, während andererseits im Kollabierungsfall eine besonders große Volumenverringerung erzielbar ist. Durch ein nicht-rechtwinklig angestelltes Knickelement, das beispielsweise in einem Winkel zwischen etwa 10° und etwa 70° zur Haupterstreckungsebene der angrenzenden Stützstrukturen angeordnet ist, wird eine Stabilisierung der sich im nicht-kollabierten Zustand befindlichen Knickstruktur gegen seitliches Wegkippen sichergestellt. Hierdurch kann vorteilhaft auf zusätzliche Stabilisierungselemente oder dergleichen verzichtet werden.

In einer weiteren vorteilhaften Ausgestaltung der Erfindung umfasst die Knickstruktur wenigstens ein die beiden Stützstrukturen verbindendes Stabilisierungselement. Ein Stabilisierungselement im Sinne der vorliegenden Erfindung ist im Unterschied zu einem Knickelement grundsätzlich derart ausgelegt, dass es beim Kollabieren der Knickstruktur, das heißt bei Beaufschlagung mit über dem vorbestimmten Grenzwert liegenden seitlichen Kräften senkrecht zur Grenzkraftrichtung, einerseits selbst möglichst nicht geknickt oder verformt wird, andererseits das Kollabieren der Knickstruktur aber auch nicht bzw. nicht wesentlich erschwert oder gar verhindert. Das Stabilisierungselement kann hierzu beispielsweise als Stabilisierungsplatte ausgebildet sein.

Ein Stabilisierungselement, welches zum Aufrechterhalten eines mechanischen Zusammenhalts der Stützstrukturen im kollabierten Zustand der Knickstruktur ausgelegt ist, verhindert ein Auseinanderbrechen der Sicherungseinrichtung während des Kollabierens und nach dem Kollabieren der betreffenden Knickstruktur besonders zuverlässig. Alternativ oder zusätzlich kann das Stabilisierungselement ein seitliches Wegkippen der Knickstruktur im nicht-kollabierten Zustand verhindern. Auf diese Weise wird ein unerwünschtes "Auslösen" bzw. ein unkontrolliertes Kollabieren der Knickstruktur besonders zuverlässig vermieden.

Weitere Vorteile ergeben sich, indem eine Erstreckungsachse des Stabilisierungselements in einem nicht-rechtwinkligen Winkel, insbesondere in einem Winkel zwischen 40° und 50°, zu jeweiligen Haupterstreckungsebenen der Stützstrukturen angeordnet ist. Beispielsweise schließen die Erstreckungsachse und die Haupterstreckungsebenen einen Winkel von 40°, 41°, 42°, 43°, 44°, 45°, 46°, 47°, 48°, 49° oder 50° ein. Hierdurch wird sichergestellt, dass das Stabilisierungselement bei kollabierter Knickstruktur parallel oder zumindest annähernd parallel zu den jeweiligen Haupterstreckungsebenen der Stützstrukturen angeordnet ist und damit möglichst wenig Volumen beansprucht. Weiterhin ist durch eine derartige Anordnung des oder der Stabilisierungselemente besonders zuverlässig sichergestellt, dass diese beim Kollabieren der Knickstruktur, das heißt bei seitlichen Kräften senkrecht zur Grenzkraftrichtung, einerseits möglichst nicht knicken, andererseits das Kollabieren der Knickstruktur aber auch nicht unnötig erschweren oder gar verhindern.

In einer weiteren vorteilhaften Ausgestaltung der Erfindung ist das Stabilisierungselement zwischen seinen Anbindungsbereichen an die beiden Stützstrukturen verdickt ausgebildet. Hierdurch wird ein unerwünschtes Knicken des oder der Stabilisierungselemente über seitliche Kräfte im Kollabierungsfall besonders zuverlässig verhindert

In einer weiteren vorteilhaften Ausgestaltung der Erfindung ist vorgesehen, dass wenigstens ein Knickelement und wenigstens ein Stabilisierungselement einen gemeinsamen Anbindungsbereich an einer Stützstruktur aufweisen. Hierdurch wird eine im Kollabierungsfall gelenkig wirksame und bauraumsparende Anbindung der Knick- und Stabilisierungselemente erzielt. Hierdurch kann eine gezielte Versteifung der Knickstruktur erzielt werden. Es kann grundsätzlich vorgesehen sein, dass nur zwischen manchen oder zwischen allen Paaren von Knickelementen ein Stabilisierungselement angeordnet ist, wodurch eine besonders präzise Steuerung des Kollabierungsverhaltens gegeben ist. Alternativ oder zusätzlich ist es vorgesehen, dass die Sicherungseinrichtung eine unterschiedliche Anzahl von Knickelementen und Stabilisierungselementen umfasst. Auch dies erlaubt eine besonders präzise Einstellbarkeit des Kollabierungsverhaltens der Knickstruktur bzw. der Knickstrukturen und der zum Kollabieren erforderlichen Knicklast.

Ein zweiter Aspekt der Erfindung betrifft ein Verfahren zum Herstellen einer Sicherungseinrichtung für eine Lageranordnung eines Rotors einer Turbomaschine, bei welchem erfindungsgemäß wenigstens eine Knickstruktur zwischen wenigstens zwei Stützstrukturen angeordnet wird, wobei die Knickstruktur derart ausgelegt wird, dass sie beim Überschreiten einer vorbestimmten, auf wenigstens eine der Stützstrukturen wirkenden Knicklast unter Volumenverringerung der Sicherungseinrichtung kollabiert. Mit anderen Worten wird im Rahmen des erfindungsgemäßen Verfahrens durch die Herstellung einer zwischen Stützstrukturen angeordneten Knickstruktur erzielt, welche im Unterschied zum Stand der Technik beim Überschreiten eines Grenzwerts bruchlos kollabiert bzw. abknickt. Im Vergleich zu einem herkömmlichen Gewaltbruch ist die zum Auslösen erforderliche Grenzkraft bei der erfindungsgemäß hergestellten Sicherungseinrichtung wesentlich präziser einstellbar. Um den zum Entkoppeln eines Rotors notwendigen Freiraum nach dem Auslösen zu schaffen, wird die Knickstruktur zwischen zwei Stützstrukturen angeordnet, so dass sich beim Kollabieren der Knickstruktur eine Volumenverringerung der Sicherungseinrichtung ergibt. Die Sicherungseinrichtung kann mit Hilfe des erfindungsgemäßen Verfahrens einfach und kostengünstig hergestellt und als präzise mechanische Sicherung verwendet werden, die sich im Unterschied zum Stand der Technik auch für Bereiche eignet, bei denen dies bisher wegen zu geringer Unterschiede zwischen den Unwuchtkräften und den Kräften aus dem normalen Betrieb nicht möglich war, beispielsweise in Turbinen. Als zusätzlich Vorteil kann daher das Gewicht der Turbinenkomponenten bzw. der Lageranordnung reduziert werden, da diese nicht mehr auf die maximal möglichen Unwuchtkräfte, sondern nur noch auf die definierte Grenzkraft ausgelegt werden müssen. Die Stützstrukturen werden dabei vorzugsweise stabiler als die Knickstruktur ausgelegt, so dass sie beim Überschreiten des gewünschten Kraftgrenzwerts nicht oder zumindest im Wesentlichen nicht kollabieren. Vorzugsweise wird die Sicherungseinrichtung mit mehreren gestapelten Stützstrukturen hergestellt, zwischen welchen jeweils eine Knickstruktur angeordnet wird. Die Stütz- und Knickstrukturen können als Mikrostrukturen ausgebildet sein, so dass durch eine Vielzahl von quasi parallel geschalteten Knickstrukturen eine besonders geringere Streuung des Knickvorgangs im Vergleich zu einem Gewaltbruch erzielt wird. Dies ermöglicht eine besonders präzise Einstellung der Grenzkraft.

In einer vorteilhaften Ausgestaltung der Erfindung ist vorgesehen, dass die Sicherungseinrichtung zumindest teilweise generativ, insbesondere durch selektives Lasersintern, hergestellt wird und/oder dass die Sicherungseinrichtung zumindest teilweise auf dem ihr zugeordneten Bauteil der Lageranordnung des Rotors der Turbomaschine hergestellt wird. Die Verwendung generativer Herstellungsverfahren, beispielsweise von selektivem Lasersintern, erlaubt eine besonders einfache und kostengünstige Herstellung der Sicherungseinrichtung mit gleichzeitig besonders präzise einstellbarer Grenzkraft. Darüber hinaus ermöglichen generative Herstellungsverfahren eine besonders hohe konstruktive und geometrische Freiheit. Es kann aber auch vorgesehen sein, dass zumindest manche Bereiche der Sicherungseinrichtung, beispielsweise Knick- und/oder Stabilisierungselemente konventionell hergestellt werden. So kann beispielsweise die Knickstruktur konventionell, beispielsweise durch Urformen gefertigt werden und dann mittels eines generativen Verfahrens mit den Stützstrukturen verbunden werden. Es kann weiterhin vorgesehen sein, dass die Sicherungseinrichtung auf einem Bauteil der Lageranordnung, das heißt unmittelbar an ihrem vorgesehenen Einsatzort erzeugt wird, wodurch eine besonders effiziente und kostengünstige Herstellung der Lageranordnung ermöglich ist.

Weitere Vorteile ergeben sich, wenn die Sicherungseinrichtung zumindest teilweise aus einem Metall, aus einer insbesondere hochtemperaturfesten Metalllegierung, aus einem keramischen Material, aus einem anorganischen und/oder organischen Kunststoff oder aus einer Mischung von zwei oder mehr dieser Werkstoffe hergestellt wird. Beispielsweise kann die Sicherungseinrichtung ganz oder teilweise aus Titan, einer Titanlegierung, einer Nickelbasislegierung, Edelstahl, Keramik oder einem anorganischen und/oder organischen Kunststoff hergestellt werden. Dies erlaubt eine besonders flexible Herstellung der Sicherungseinrichtung sowie eine präzise Einstellbarkeit der zum Kollabieren erforderlichen Grenzkräfte.

Ein dritter Aspekt der Erfindung betrifft eine Lageranordnung eines Rotors einer Turbomaschine, insbesondere eines Flugtriebwerks, bei welcher erfindungsgemäß vorgesehen ist, dass die Lageranordnung eine Sicherungseinrichtung gemäß dem ersten Erfindungsaspekt und/oder eine mittels eines Verfahrens gemäß dem zweiten Erfindungsaspekt erhältliche oder erhaltene Sicherungseinrichtung umfasst. Die sich hieraus ergebenden Merkmale und deren Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

In einer vorteilhaften Ausgestaltung der Erfindung ist vorgesehen, dass die Sicherungseinrichtung derart angeordnet ist, dass ihre Knickstruktur kollabiert, sobald am bewegten Rotor eine einen vorbestimmten Grenzwert übersteigende dynamische Unwucht auftritt, und/oder dass bei kollabierter Knickstruktur eine Übertragung von einen vorbestimmten Grenzwert überschreitenden Radiallasten vom bewegten Rotor auf die Lageranordnung zumindest überwiegend verhindert ist. Dies erlaubt im Schadensfall des Rotors, beispielsweise bei einem Schaufelbruch und beim Auftreten extremer Radiallasten, eine besonders zuverlässige Entkopplung des Rotors von statischen Strukturen und einen entsprechend guten Schutz vor Beschädigungen der Lageranordnung oder weiterer Bauteile einer Turbomaschine, beispielsweise eines Flugzeugtriebwerks.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische seitliche Schnittansicht einer erfindungsgemäßen Sicherungseinrichtung;
- Fig. 2: eine vergrößerte Darstellung des in Fig. 1 gezeigten Details II;
- Fig. 3: eine schematische seitliche Schnittansicht der in Fig. 1 gezeigten Sicherungseinrichtung mit kollabierter Knickstruktur;
- Fig. 4: eine Prinzipdarstellung der erfindungsgemäßen Sicherungseinrichtung gemäß einem zweiten Ausführungsbeispiel; und
- Fig. 5: eine Prinzipdarstellung der erfindungsgemäßen Sicherungseinrichtung gemäß einem dritten Ausführungsbeispiel.

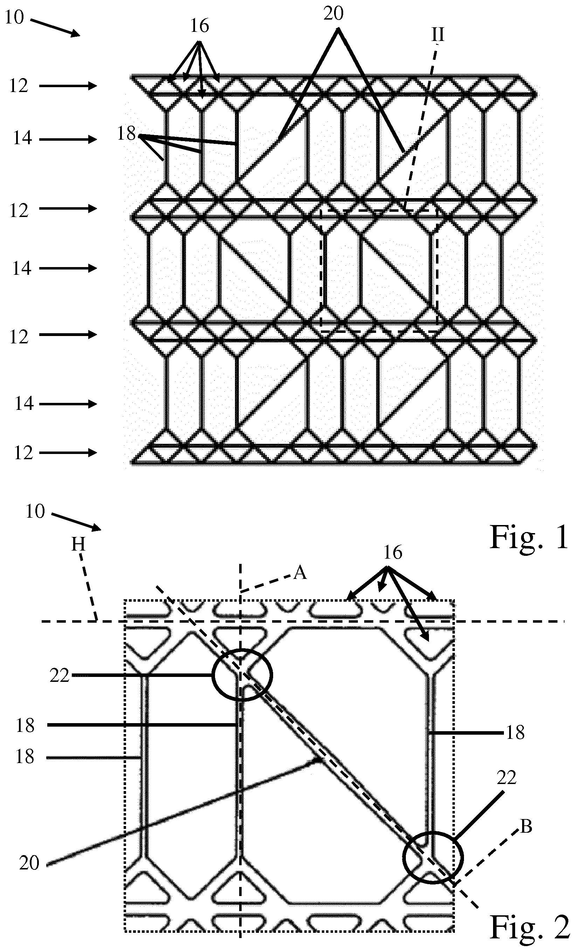

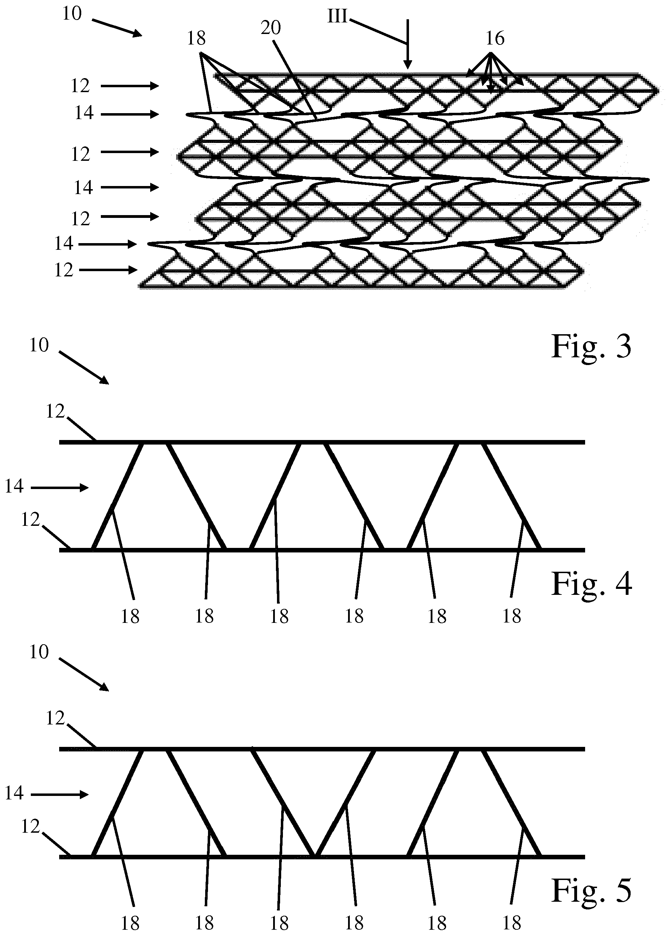

Fig. 1 zeigt eine schematische seitliche Schnittansicht einer erfindungsgemäßen Sicherungseinrichtung 10 für eine Lageranordnung eines Rotors eines Flugzeugtriebwerks. Die Sicherungseinrichtung 10 umfasst als Mikrostruktur in Anzahl und Anordnung beispielhaft vier Stützstrukturen 12, zwischen denen jeweils eine Knickstruktur 14 angeordnet ist. Die Sicherungseinrichtung 10 wird im Folgenden in Zusammenschau mit Fig. 2 und Fig. 3 erläutert werden. Fig. 2 zeigt dabei eine vergrößerte Darstellung des in Fig. 1 gezeigten Details II, während Fig. 3 eine schematische seitliche Schnittansicht der in Fig. 1 gezeigten Sicherungseinrichtung 10 mit kollabierter Knickstruktur 14 zeigt.

Die Knickstrukturen 14 sind derart ausgelegt, dass sie beim Überschreiten einer vorbestimmten, auf wenigstens eine der Stützstrukturen 12 wirkenden Knicklast, die in Fig. 3 mit dem Pfeil III symbolisiert wird, unter Volumenverringerung der Sicherungseinrichtung 10 kollabieren. Die Stützstrukturen 12 sind demgegenüber so stabil ausgelegt, dass sie die einzelnen Knickstrukturen 14 mechanisch voneinander trennen, das heißt zumindest weitgehend keine Verformungskräfte aus einer Knickstruktur 14 in eine andere Knickstruktur 14 übertragen. Weiterhin erkennt man in Fig. 3, dass die Stützstrukturen 12 mechanisch so stabil ausgelegt sind, dass sie beim Kollabieren der Knickstrukturen 14 nicht oder zumindest im Wesentlichen nicht verformt werden. Hierzu weisen die Stützstrukturen 12 Hohlräume 16 auf, die regelmäßig angeordnet sind und im Querschnitt die Form gleichseitiger Dreiecke aufweisen. Aus Gründen der Übersichtlichkeit sind in Fig. 1 bis 3 nur einige der Hohlräume 16 beispielhaft mit Bezugszeichen versehen. Grundsätzlich können die Stützstrukturen 12 auch unterschiedlich ausgebildet sein und beispielsweise unregelmäßig angeordnete Hohlräume 16 aufweisen oder nach Art einer Wellpappe mit einer zwischen zwei Begrenzungswänden angeordneten gewellten Wand ausgebildet sein.

Die Knickstrukturen 14 umfassen jeweils mehrere als Knickplatten ausgebildete Knickelemente 18. Aus Gründen der Übersichtlichkeit sind in Fig. 1 bis 3 nur einige der Knickelemente 18 beispielhaft mit Bezugszeichen versehen. Die Knickelemente 18 sind an ihren gegenüberliegenden Endbereichen jeweils mit einer der benachbarten Stützstrukturen 12 verbunden. Die Erstreckungsachsen A der Knickelemente 18 sind dabei zumindest im Wesentlichen senkrecht zu jeweiligen, in Fig. 2 gestrichelt angedeuteten Haupterstreckungsebenen H der Stützstrukturen 12 angeordnet.

Wie aus Fig. 3 erkennbar ist, werden die Knickelemente 18 aufgrund der mit Pfeil III symbolisierten Knicklast beim Kollabieren der Knickstruktur 14 biegegeknickt, wodurch die Volumenverringerung der Sicherungseinrichtung 10 bewirkt wird. Die Länge und Dicke der einzelnen Knickelemente 18 ist derart dimensioniert, dass diese nach dem 4. Eulerschen Knickfall knicken, wodurch die in Fig. 3 mit Pfeil III symbolisierte Grenzkraft bzw. Knicklast präzise einstellbar ist. Wie man insbesondere in Fig. 2 gut erkennt, umfassen die Knickstrukturen 14 jeweils mehrere Stabilisierungselemente 20, mittels welchen der mechanische Zusammenhalt der Stützstrukturen 12 im kollabierten Zustand der Knickstrukturen 14 sichergestellt wird. Die Erstreckungsachsen B der Stabilisierungselemente 20 sind im Unterschied zu den in Fig. 2 gestrichelt angedeuteten Erstreckungsachsen A der Knickelemente 18 in einem betragsmäßigen Winkel von ungefähr 45° zu den jeweiligen Haupterstreckungsebenen H der Stützstrukturen 12 angeordnet und erstrecken sich diagonal zwischen manchen benachbarten Knickelementen 18. Wie man in Fig. 1 erkennt, alternieren im gezeigten Ausführungsbeispiel die Winkel der in Fig. 2 gestrichelt angedeuteten Erstreckungsachsen B in benachbarten Knickstrukturen 14 zwischen 45° und -45° (bzw. 315°). Dies erlaubt einerseits eine kompakte Anordnung der kollabierten Knickstrukturen 14 und andererseits eine präzise Einstellung der zum Kollabieren erforderlichen Grenzkraft. Es ist aber zu betonen, dass auch abweichende Anordnungen der Stabilisierungselemente 20 vorgesehen sein können. Weiterhin erkennt man, dass die Knickstrukturen 14 mehr Knickelemente 18 als Stabilisierungselemente 20 umfassen. Wie insbesondere aus Fig. 2 hervorgeht, weisen die Knickelemente 18 und die Stabilisierungselemente 20 gemeinsame Anbindungsbereiche 22 an den jeweiligen Stützstrukturen 12 auf, wodurch eine gelenkig wirkende und bauraumsparende Verbindung erzielt ist. Da die Stabilisierungselemente 20, die vorliegend als Stabilisierungsplatten ausgebildet sind, beim Kollabieren der Knickstrukturen 14 bei seitlichen Kräften senkrecht zur Grenzkraftrichtung (Pfeil III) möglichst nicht knicken sollen, das Kollabieren der Knickelemente 18 aber auch nicht verhindern sollen, sind die Stabilisierungselemente 20 an ihren Anbindungsbereichen 22 im Querschnitt möglichst dünn bzw. ähnlich dick wie die Knickelemente 18 ausgebildet, um hier gelenkig wirken zu können. Zur Mitte hin sind die Stabilisierungselemente 20 aber im Gegensatz zu den Knickelementen 18 im Querschnitt aufgedickt bzw. versteift, um ein Knicken durch seitliche Kräfte beim Kollabieren der Knickstrukturen 14 zu verhindern. Durch die Vielzahl der parallel geschalteten Knickelemente 18 und die geringe Streuung des Knickvorgangs im Vergleich beispielsweise zu einem Gewaltbruch, ist die in Fig. 3 mit Pfeil III symbolisierte Grenzkraft besonders präzise einstellbar.

Die Sicherungseinrichtung 10 wird teilweise oder vollständig generativ hergestellt, wodurch auch die vergleichsweise komplexen Hohlraum-Geometrien schnell, einfach und präzise herstellbar sind. Als generatives Verfahren kann beispielsweise das an sich bekannte selektive Lasersintern verwendet werden. Jedoch können auch andere Herstellungsverfahren sowie Kombinationen unterschiedlicher Herstellungsverfahren vorgesehen sein. Beispielsweise können die Knickelemente 18 und/oder die Stabilisierungselemente 20 konventionell hergestellt und durch selektives Lasersintern mit den Stützstrukturen 12 verbunden werden.

Fig. 4 zeigt eine Prinzipdarstellung der erfindungsgemäßen Sicherungseinrichtung 10 gemäß einem zweiten Ausführungsbeispiel. Im Unterschied zum vorhergehenden Ausführungsbeispiel ist die Sicherungseinrichtung 10 ohne Stabilisierungselemente 20 ausgebildet. Um ein seitliches Verkippen der Knickstruktur 14 im nicht-kollabierten Zustand zu verhindern, sind die Knickelemente 18 vorliegend winklig angestellt. Man erkennt, dass die Knickelemente 18 im gezeigten Ausführungsbeispiel alternierend in Winkeln von etwa 45° bzw. von etwa 135° bezüglich der planaren Stützstrukturen 12 angeordnet sind und zumindest näherungsweise eine "∧"-förmige Struktur in der Art eines Kartenhauses bilden. Grundsätzlich ist es aber auch möglich, dass die Knickelemente 18 in anderen Winkeln bzw. Winkelabfolgen und relativen Abständen zueinander angeordnet sind.

Fig. 5 zeigt hierzu eine Prinzipdarstellung der erfindungsgemäßen Sicherungseinrichtung 10 gemäß einem dritten Ausführungsbeispiel. Man erkennt, dass auf ein Paar von Knickelementen 18, die zusammen näherungsweise eine "∧"-förmige Struktur bilden, ein Paar von Knickelementen 18 folgt, welches eine "v"-förmige Struktur mit einem gemeinsamen Anbindungsbereich an der unteren Stützstruktur 12 bildet. Anschließend folgt erneut ein Paar von Knickelementen 18, die zusammen näherungsweise eine "∧"-förmige Struktur bilden. Ebenso kann vorgesehen sein, dass analog zum ersten Ausführungsbeispiel mehr als zwei Stützstrukturen 12 übereinander gestapelt sind, wobei die zwischen den jeweiligen Stützstrukturen 12 angeordneten Knickstrukturen 14 jeweils unterschiedlich winklig angestellte Knickelemente 18 aufweisen.

## Patentansprüche

1. Sicherungseinrichtung (10) für eine Lageranordnung eines Rotors einer Turbomaschine, wobei
die Sicherungseinrichtung (10) wenigstens zwei Stützstrukturen (12) umfasst, zwischen welchen wenigstens eine Knickstruktur (14) angeordnet ist, die ausgelegt ist, beim Überschreiten einer vorbestimmten, auf wenigstens eine der Stützstrukturen (12) wirkenden Knickläst unter Volumenverringerung der Sicherungseinrichtung (10) zu kollabieren, wobei die beiden Stützstrukturen (12) stabiler ausgelegt sind als die Knickstruktur (14),
**dadurch gekennzeichnet, dass**
die Knickstruktur (14) mehrere als Knickplatten ausgebildete Knickelemente (16) aufweist, die an ihren gegenüberliegenden Endbereichen jeweils mit einer der benachbarten Stützstruktur (12) verbunden sind, wobei die beiden Stützstrukturen (12) voneinander beabstandet sind.

2. Sicherungseinrichtung (10) nach Anspruch 1,
**dadurch gekennzeichnet, dass**
wenigstens eine der Stützstrukturen (12) Hohlräume (16) aufweist.

3. Sicherungseinrichtung (10) nach Anspruch 2,
**dadurch gekennzeichnet, dass**
die Hohlräume (16) zumindest bereichsweise regelmäßig angeordnet und/oder zumindest teilweise im Querschnitt polygonal, insbesondere als regelmäßige Polygone ausgebildet sind.

4. Sicherungseinrichtung (10) nach einem der Ansprüche 1 bis 3,
**dadurch gekennzeichnet, dass**
eine Erstreckungsachse (A) des wenigstens einen Knickelements (18) zumindest im Wesentlichen senkrecht und/oder in einem nicht-rechtwinkligen Winkel zu jeweiligen Haupterstreckungsebenen (H) der Stützstrukturen (12) angeordnet ist.

5. Sicherungseinrichtung (10) nach einem der Ansprüche 1 bis 4,
**dadurch gekennzeichnet, dass**
die Knickstruktur (14) wenigstens ein die beiden Stützstrukturen (12) verbindendes Stabilisierungselement (20) umfasst, wobei das eine Ende des Stabilisierungselement (20) mit dem einen Ende des einen Knickelements (18), das mit dem einem der beiden Stützstrukturen (12) verbunden ist, angeordnet ist und das andere Ende des Stabilisierungselement (20) mit anderen Ende des anderen Knickelements (18) angeordnet ist, das mit dem anderen der beiden Stützstrukturen (12) verbunden ist.

6. Sicherungseinrichtung (10) nach Anspruch 5,
**dadurch gekennzeichnet, dass**
eine Erstreckungsachse (B) des Stabilisierungselements (20) in einem nicht-rechtwinkligen Winkel, insbesondere in einem betragsmäßigen Winkel zwischen 40° und 50°, zu jeweiligen Haupterstreckungsebenen (H) der Stützstrukturen (12) angeordnet ist.

7. Sicherungseinrichtung (10) nach einem der Ansprüche 5 bis 6,
**dadurch gekennzeichnet, dass**
das Stabilisierungselement (20) zwischen seinen Anbindungsbereichen (22) an die beiden Stützstrukturen (12) verdickt ausgebildet ist.

8. Sicherungseinrichtung (10) nach wenigstens einem der Ansprüche 4 und wenigstens einem der Ansprüche Anspruch 5 bis 7,
**dadurch gekennzeichnet, dass**
wenigstens ein Knickelement (14) und wenigstens ein Stabilisierungselement (20) einen gemeinsamen Anbindungsbereich (22) an einer Stützstruktur (12) aufweisen und/oder dass die Sicherungseinrichtung (10) eine unterschiedliche Anzahl von Knickelementen (14) und Stabilisierungselementen (20) umfasst.

9. Verfahren zum Herstellen einer Sicherungseinrichtung (10) für eine Lageranordnung eines Rotors einer Turbomaschine nach mindestens einem der obigen Ansprüche,
**dadurch gekennzeichnet, dass**
die Sicherungseinrichtung (10) zumindest teilweise generativ, insbesondere durch selektives Lasersintern, hergestellt wird und/oder dass die Sicherungseinrichtung (10) zumindest teilweise auf dem ihr zugeordneten Bauteil der Lageranordnung des Rotors der Turbomaschine hergestellt wird.

10. Verfahren nach Anspruch 9,
**dadurch gekennzeichnet, dass**
die Sicherungseinrichtung (10) zumindest teilweise aus einem Metall, aus einer insbesondere hochtemperaturfesten Metalllegierung, aus einem keramischen Material, aus einem anorganischen und/oder organischen Kunststoff oder aus einer Mischung von zwei oder mehr dieser Werkstoffe hergestellt wird.

11. Lageranordnung eines Rotors einer Turbomaschine, insbesondere eines Flugtriebwerks,
**dadurch gekennzeichnet, dass**
diese eine Sicherungseinrichtung (10) nach einem der Ansprüche 1 bis 8 umfasst.

12. Lageranordnung nach Anspruch 11,
**dadurch gekennzeichnet, dass**
die Sicherungseinrichtung (10) derart angeordnet ist, dass ihre Knickstruktur (14) kollabiert, sobald am bewegten Rotor eine einen vorbestimmten Grenzwert übersteigende dynamische Unwucht auftritt, und/oder dass bei kollabierter Knickstruktur (14) eine Übertragung von einen vorbestimmten Grenzwert übersteigenden Radiallasten vom bewegten Rotor auf die Lageranordnung zumindest überwiegend verhindert ist.

## Claims

1. Safety device (10) for a bearing arrangement of a rotor of a turbomachine, the safety device (10) comprising at least two support structures (12) between which at least one buckling structure (14) is arranged which is designed to collapse by reducing the volume of the safety device (10) when a predetermined buckling load acting on at least one of the support structures (12) is exceeded, the two support structures (12) being designed to be more stable than the buckling structure (14),
**characterized in that**
the buckling structure (14) has a plurality of buckling elements (16) which are in the form of buckling plates and, at each of the opposing ends thereof, are connected to one of the adjacent support structures (12), the two support structures (12) being mutually spaced.

2. Safety device (10) according to claim 1,
**characterized in that**
at least one of the support structures (12) has cavities (16).

3. Safety device (10) according to claim 2,
**characterized in that**
the cavities (16) are arranged so as to be regular at least in regions and/or designed to be at least partially polygonal in cross section, in particular to be regular polygons.

4. Safety device (10) according to any of claims 1 to 3,
**characterized in that**
an extension axis (A) of the at least one buckling element (18) is arranged so as to be at least substantially perpendicular and/or at a non-orthogonal angle in relation to the respective main extension planes (H) of the support structures (12).

5. Safety device (10) according to any of claims 1 to 4,
**characterized in that**
the buckling structure (14) comprises at least one stabilizing element (20) that connects the two support structures (12), one end of the stabilizing element (20) being arranged together with one end of one buckling element (18) which is connected to one of the two support structures (12), and the other end of the stabilizing element (20) being arranged together with the other end of the other buckling element (18) which is connected to the other of the two support structures (12).

6. Safety device (10) according to claim 5,
**characterized in that**
an extension axis (B) of the stabilizing element (20) is arranged at a non-orthogonal angle, in particular at an angle between 40° and 50°, in relation to the respective main extension planes (H) of the support structures (12).

7. Safety device (10) according to either claim 5 or claim 6,
**characterized in that**
the stabilizing element (20) is thicker between its two connection regions (22) to the two support structures (12).

8. Safety device (10) according to at least one of claims 4 and at least one of claims 5 to 7,
**characterized in that**
at least one buckling element (14) and at least one stabilizing element (20) have a common connection region (22) to a support structure (12), and/or **in that** the safety device (10) comprises a varying number of buckling elements (14) and stabilizing elements (20).

9. Method for producing a safety device (10) for a bearing arrangement of a rotor of a turbomachine according to at least one of the above claims,
**characterized in that**
the safety device (10) is produced generatively at least in part, in particular by means of selective laser sintering, and/or **in that** the safety device (10) is produced at least in part on the component associated therewith of the bearing arrangement of the rotor of the turbomachine.

10. Method according to claim 9,
**characterized in that**
the safety device (10) is produced at least in part from a metal, from a particularly high-temperature resistant metal alloy, from a ceramic material, from an inorganic and/or organic plastics material or from a mixture of two or more of these materials.

11. Bearing arrangement of a rotor of a turbomachine, in particular of an aircraft engine,
**characterized in that**
said arrangement comprises a safety device (10) according to any of claims 1 to 8.

12. Bearing arrangement according to claim 11,
**characterized in that**
the safety device (10) is arranged in such a way that the buckling structure (14) thereof collapses as soon as a dynamic imbalance that exceeds a predetermined limit value occurs on the moving rotor, and/or **in that** a radial load that exceeds a predetermined limit value is at least predominantly prevented from being transferred from the moving rotor to the bearing arrangement when the buckling structure (14) collapses.

## Revendications

1. Dispositif de sécurité (10) destiné à un ensemble de paliers d'un rotor d'une turbomachine,
le dispositif de sécurité (10) comprenant au moins deux structures de support (12), entre lesquelles est disposée au moins une structure de flambage (14) conçue pour s'affaisser en cas de dépassement d'une contrainte de flambage prédéterminée, agissant sur au moins une des structures de support (12) pendant la réduction de volume du dispositif de sécurité (10), les deux structures de support (12) étant conçues pour être plus stables que la structure de flambage (14), **caractérisé en ce que**
la structure de flambage (14) comporte une pluralité d'éléments de flambage (16), conçus sous la forme de plaques de flambage, qui sont chacun reliés, au niveau de leurs zones d'extrémité opposées, à une des structures de support adjacentes (12), les deux structures de support (12) étant espacées l'une de l'autre.

2. Dispositif de sécurité (10) selon la revendication 1,
**caractérisé en ce que**
au moins une des structures de support (12) comporte des cavités (16).

3. Dispositif de sécurité (10) selon la revendication 2,
**caractérisé en ce que**
les cavités (16) sont disposées régulièrement au moins par endroits et/ou sont au moins partiellement polygonales, notamment sont conçues sous la forme de polygones réguliers.

4. Dispositif de sécurité (10) selon l'une des revendications 1 à 3,
**caractérisé en ce que**
un axe d'extension (A) de l'au moins un élément de flambage (18) est disposé au moins sensiblement perpendiculairement et/ou suivant un angle non droit par rapport à des plans d'extension principaux respectifs (H) des structures de support (12).

5. Dispositif de sécurité (10) selon l'une des revendications 1 à 4,
**caractérisé en ce que**
la structure de flambage (14) comprend au moins un élément de stabilisation (20) reliant les deux éléments de structures de support (12), l'une des extrémités de l'élément de stabilisation (20) étant disposée à l'une des extrémités de l'un des éléments de flambage (18) qui est reliée à l'une des deux structures de support (12), et l'autre extrémité de l'élément de stabilisation (20) étant disposée à l'autre extrémité de l'autre élément de flambe (18) qui est reliée à l'autre des deux structures de support (12).

6. Dispositif de sécurité (10) selon la revendication 5,
**caractérisé en ce que**
un axe d'extension (B) de l'élément de stabilisation (20) est disposé suivant un angle non droit, et en particulier suivant un angle compris en valeur absolue entre 40° et 50° par rapport aux plans d'extension principaux respectifs (H) des structures de support (12).

7. Dispositif de sécurité (10) selon l'une des revendications 5 à 6,
**caractérisé en ce que**
l'élément de stabilisation (20) est pourvu d'un renflement entre ses zones de liaison (22) reliées aux deux structures de support (12).

8. Dispositif de sécurité (10) selon l'une au moins des revendications 4 et l'une au moins des revendications 5 à 7,
**caractérisé en ce que**
au moins un élément de flambage (14) et au moins un élément de stabilisation (20) comportent une zone de liaison commune (22) reliée à une structure de support (12) et/ou **en ce que** le dispositif de sécurité (10) comporte un nombre différent d'éléments de flambage (14) et d'éléments de stabilisation (20).

9. Procédé de fabrication d'un dispositif de sécurité (10) destiné à un ensemble de paliers d'un rotor d'une turbomachine selon l'une au moins des revendications précédentes,
**caractérisé en ce que**
le dispositif de sécurité (10) est fabriqué de manière au moins partiellement générative, notamment par frittage sélectif au laser, et/ou **en ce que** le dispositif de sécurité (10) est fabriqué au moins partiellement sur le composant, qui lui est associé de l'ensemble de paliers du rotor de la turbomachine.

10. Procédé selon la revendication 9,
**caractérisé en ce que**
le dispositif de sécurité (10) est fabriqué au moins partiellement à partir d'un métal, en particulier d'un alliage métallique résistant aux hautes températures, d'un matériau céramique, d'une matière synthétique minérale et/ou organique ou d'un mélange d'au moins deux de ces matières.

11. Ensemble de paliers d'un rotor de turbomachine, notamment d'un moteur d'avion,
**caractérisé en ce que**
ledit ensemble comprend un dispositif de sécurité (10) selon l'une des revendications 1 à 8.

12. Ensemble de paliers selon la revendication 11,
**caractérisé en ce que**
le dispositif de sécurité (10) est disposé de telle sorte que sa structure de flambage (14) s'affaisse dès qu'un déséquilibre dynamique, dépassant une valeur limite prédéterminée, se produit au niveau du rotor en mouvement et/ou **en ce que**, lorsque la structure de flambage (14) s'est affaissée, la transmission de contraintes radiales, dépassant une valeur limite prédéterminée, du rotor en mouvement à l'ensemble de paliers est empêchée au moins dans une large mesure.
